# EUROPÄISCHE PATENTSCHRIFT

(11) **EP 1 451 497 B1**
(45) Veröffentlichungstag und Bekanntmachung des Hinweises auf die Patenterteilung: **31.08.2005**
(21) Anmeldenummer: 02791723.6
(22) Anmeldetag: 27.11.2002
(51) Int. Cl.: F16L 11/127, F16L 9/12, F16L 25/00

(54) **KUNSTSTOFFSCHLAUCH, INSBESONDERE PNEUMATIKSCHLAUCH**
PLASTIC TUBE, ESPECIALLY A PNEUMATIC TUBE
TUYAU EN MATIERE PLASTIQUE, NOTAMMENT TUYAU PNEUMATIQUE

(30) Priorität: 06.12.2001 DE 10160060
(43) Veröffentlichungstag der Anmeldung: 01.09.2004
(73) Patentinhaber: Festo Ag & Co., 73734 Esslingen (DE)
(72) Erfinder: BUCK, Steffen, 71642 Ludwigsburg (DE); CLAUS, Hans-Jürgen, 70199 Stuttgart (DE); ZOLLER, Klaus, 70186 Stuttgart (DE); BRENNER, Hans-Walter, 70565 Stuttgart (DE)
(74) Vertreter: Vetter, Hans
(86) Internationale Anmeldenummer: PCT/EP2002/013350
(87) Internationale Veröffentlichungsnummer: WO 2003/048622

(56) Entgegenhaltungen:
- EP-A- 0 882 924
- WO-A-99/45305
- GB-A- 2 211 266

## Beschreibung

Die Erfindung betrifft einen Kunststoffschlauch, insbesondere einen Pneumatikschlauch, mit wenigstens zwei sich entlang des Schlauchkörpers erstreckenden elektrischen Leitungen.

Insbesondere pneumatische Einrichtungen und Geräte benötigen neben pneumatischen Schlauchanschlüssen auch elektrische Anschlüsse zur Übertragung von elektrischen Steuersignalen, Sensorsignalen und Versorgungsspannungen. Dies kann im Einzelfall dazu führen, dass eine Vielzahl von Leitungen, Schläuchen und Kabeln die Installation, Wartung und Reparatur derartiger Einrichtungen aufwendig, unübersichtlich und teuer machen. Entsprechende Probleme treten auch bei hydraulischen Einrichtungen und Geräten und sonstigen Einrichtung auf, bei denen sowohl Fluide als auch elektrische Signale übertragen werden müssen.

Zur Lösung dieses Problems ist es beispielsweise aus der DE 19827883 A1 bekannt, in der Wandung eines Pneumatikschlauchs metallische Leiter zu integrieren. Um die Flexibilität zu erhalten, müssen diese Leiter einen sehr geringen Querschnitt aufweisen, was wiederum die Kontaktierung relativ kompliziert und aufwendig macht. Um diese überhaupt zu ermöglichen, muss die Außenkontur des Pneumatikschlauchs asymmetrisch ausgestaltet werden, um bei der Kontaktierung die erforderliche Winkelpositionierung vorzugeben.

Eine Aufgabe der vorliegenden Erfindung besteht darin, einen Kunststoffschlauch zur Übertragung von fluidischen Medien mit zusätzlichen elektrischen Leitern zu schaffen, der bei einfacher und kostengünstiger Herstellung eine einfachere Kontaktierung bei sehr guter Flexibilität ermöglicht.

Diese Aufgabe wird erfindungsgemäß dadurch gelöst, dass die Leitungen als Streifen eines metallisierten Geflechts aus Kunststoffmaterial oder Naturfasern ausgebildet sind, die beabstandet voneinander am Schlauchkörper angebracht sind.

Das metallisierte Geflecht aus Kunststoffmaterial oder Naturfasern ist höchst flexibel, wodurch auch der gesamte Kunststoffschlauch sehr flexibel und dauerhaft ist, da das streifenförmige Geflecht äußerst abrissfest ist und praktisch jede Bewegung des Schlauches mitgeht. Ein Brechen dieses Geflechts ist nahezu ausgeschlossen. Es sind sehr kleine Biegeradien des Kunststoffschlauchs möglich, ohne dass die Leitfähigkeit durch Stauchen oder Überstrecken beeinträchtigt wird. Die Breite des streifenförmigen Geflechts kann sich über einen großen Teil des Umfangs erstrecken, so dass auch bei angestrebter geringer Geflechtdicke eine gute elektrische Leitfähigkeit erreicht und der Berstdruck gleichzeitig erhöht wird.

Die Breite erlaubt darüber hinaus eine einfache Kontaktierung, sowohl radial (umfangsseitig) als auch axial (stirnseitig).

Durch die in den Unteransprüchen aufgeführten Maßnahmen sind vorteilhafte Weiterbildungen und Verbesserungen des im Anspruch 1 angegebenen Kunststoffschlauchs möglich.

Eine besonders gute Flexibilität im Hinblick auf das beim Biegen auftretende Stauchen oder Strecken des Geflechts wird dadurch erreicht, dass das Geflecht im Wesentlichen rechtwinklig zueinander verlaufende Faseranordnungen besitzt. Dabei verlaufen die Fasern einer der Faseranordnungen vorzugsweise in der Längsrichtung des jeweiligen Streifens.

Die Streifen können in der Längsrichtung des Kunststoffschlauchs verlaufen, oder um ihn herum gewendelt sein.

Der Abstand zwischen den Streifen wird zur Erzielung einer möglichst großen Leitfähigkeit sehr klein gewählt, vorzugsweise kleiner als 10 % der Streifenbreite.

Zum Schutz der Außenfläche des Kunststoffschlauchs gegen Abrieb, Kurzschlüsse zwischen den leitfähigen Streifen und unerwünschte Kontaktierung mit metallischen Teilen, Masseleitern oder spannungsführenden Elementen ist der Kunststoffschlauch zweckmäßigerweise mit einer die Streifen einschließenden schlauchförmigen Schutzhülle aus Kunststoffmaterial versehen.

Die Streifen werden zweckmäßigerweise wenigstens teilweise mit dem Schlauchkörper oder mit einer ihn umgebenden Schutzschicht verklebt, verschweißt oder einextrudiert. Das Einextrudieren hat den besonderen Vorteil, dass der Kunststoffschlauch in einem Arbeitsgang beim Extrudieren erzeugt werden kann.

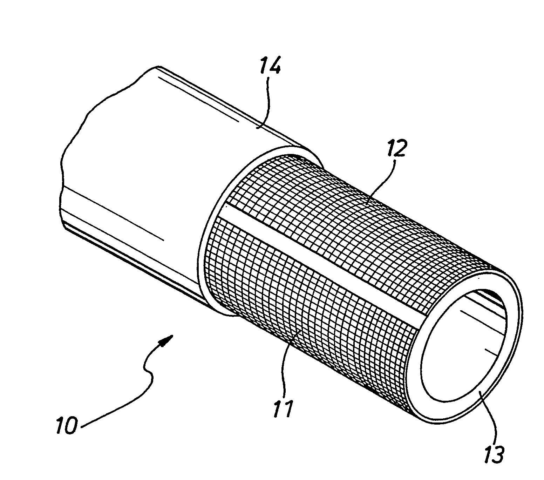

Ein Ausführungsbeispiel der Erfindung ist in der Zeichnung dargestellt und in der nachfolgenden Beschreibung näher erläutert. Die einzige Figur zeigt eine perspektivische Darstellung eines Endbereichs eines Kunststoffschlauchs mit endseitig entfernter Schutzhülle als Ausführungsbeispiel der Erfindung.

Der im einzigen Ausführungsbeispiel perspektivisch dargestellte Kunststoffschlauch 10 kann beispielsweise als Pneumatikschlauch, Hydraulikschlauch oder zur Übertragung eines sonstigen flüssigen oder gasförmigen Mediums eingesetzt werden. Zusätzlich können über diesen Kunststoffschlauch elektrische Signale, beispielsweise Sensorsignale, Steuersignale oder Versorgungsspannungen, mittels zweier Streifen 11, 12 übertragen werden, die aus einem metallisierten Geflecht aus Kunststoffmaterial oder Naturfasern bestehen.

Das metallisierte Geflecht der beiden Streifen 11, 12 weist zwei im Wesentlichen rechtwinklig zueinander verlaufende Faseranordnungen auf, wobei die Fasern einer Faseranordnung in der Längsrichtung des jeweiligen Streifens 11, 12, das heißt, in der Längsrichtung des Kunststoffschlauchs 10, verlaufen.

Die beiden Streifen 11, 12 sind an der Außenseite eines Schlauchkörpers 13 aus Kunststoff angebracht, der aus einem für derartige Schläuche üblichen Kunststoffmaterial besteht, beispielsweise Polyurethan, Polyamid, Polyethylen, Polypropylen, PTFE oder PVC. Sofern das Geflecht der Streifen 11, 12 nicht aus Naturfasern besteht, kann hierfür eines der vorgenannten Kunststoffmaterialien verwendet werden, wobei das Geflecht in jedem Falle zur Erzielung der erforderlichen elektrischen Leitfähigkeit metallisiert wird.

Im dargestellten Ausführungsbeispiel verlaufen zwei Streifen 11, 12 parallel zueinander in der Längsrichtung des Kunststoffschlauchs 10 und weisen zueinander einen geringen Abstand auf, der die erforderliche elektrische Trennung bewirkt. Dieser Abstand kann sehr klein sein, beispielsweise weniger als 10 % der Breite einer Streifens 11 bzw. 12. Dies heißt, die Streifen 11, 12 werden zur Erzielung einer möglichst großen elektrischen Leitfähigkeit so breit wie möglich gemacht. Die Erfindung ist selbstverständlich nicht auf zwei Streifen 11, 12 beschränkt, vielmehr kann die Zahl der Streifen entsprechend der Zahl der gewünschten elektrischen Leitungen auch größer sein, wobei die Breite der Streifen mit größer werdender Anzahl entsprechend abnimmt.

Die Streifen 11, 12 können mit dem Schlauchkörper 13 verklebt oder verschweißt sein, sie können jedoch auch beim Extrudieren des Schlauchkörpers 13 mit einextrudiert werden, was die günstigste Herstellungsmethode darstellen dürfte.

Bei Bedarf kann noch eine Zwischen- oder Schutzschicht zwischen dem Schlauchkörper 13 und den Steifen 11, 12 angeordnet sein. In diesem Falle werden die Streifen 11, 12 selbstverständlich auf dieser Schutzschicht angebracht.

Anstelle der Anordnung der Streifen 11, 12 in der Längsrichtung des Kunststoffschlauchs 10 können sie auch wendelförmig am Schlauchkörper 13 angebracht sein.

Der mit den Streifen 11, 12 versehene Schlauchkörper 13 ist noch zusätzlich mit einer schlauchförmigen Schutzhülle 14 aus nicht leitfähigem Kunststoffmaterial umgeben. Diese kann beim Extrudieren oder nachträglich aufgebracht werden. Die Dicke des leitfähigen Geflechts kann sehr gering sein und beispielsweise nur in der Größenordnung von 1/10 mm liegen. Dadurch wird der Gesamtdurchmesser des Kunststoffschlauchs 10 so gut wie nicht gegenüber herkömmlichen Schläuchen verändert, und es können sehr kleine Außendurchmesser realisiert werden.

Infolge der Breite der Streifen 11, 12 ist die elektrische Kontaktierung sehr einfach durchzuführen und kann vom Umfang her oder stirnseitig erfolgen, beispielsweise durch eine mit entsprechenden Kontakten versehene Verschraubung. Dabei kann die Schutzhülle 14 entweder an der Kontaktierungsstelle entfernt werden, oder es werden Kontaktspitzen verwendet, die durch die Schutzhülle 14 hindurch mit den Streifen 11, 12 in Kontakt gelangen.

Derartige leitfähige Streifen können auch in mehreren, z.B. zwei übereinanderliegenden Schichten angeordnet sein, wobei elektrisch isolierende Zwischenschichten zur gegenseitigen Isolierung erforderlich sind. Dabei kann jede Schicht einen oder mehrere Streifen aufweisen. Bei nur einem Streifen pro Schicht kann dieser auch schlauchförmig ausgebildet sein. Bei mehreren Streifen pro Schicht können diese radial fluchtend übereinander liegen.

## Patentansprüche

1. Kunststoffschlauch, insbesondere Pneumatikschlauch, mit wenigstens zwei sich entlang des Schlauchkörpers erstreckenden elektrischen Leitungen, **dadurch gekennzeichnet, dass** die Leitungen als Streifen (11, 12) eines metallisierten Geflechts aus Kunststoffmaterial oder Naturfasern ausgebildet sind, die beabstandet voneinander am Schlauchkörper (13) angebracht sind.

2. Kunststoffschlauch nach Anspruch 1, **dadurch gekennzeichnet, dass** das Geflecht der Streifen (11, 12) im Wesentlichen rechtwinklig zueinander verlaufende Faseranordnungen besitzt.

3. Kunststoffschlauch nach Anspruch 2, **dadurch gekennzeichnet, dass** die Fasern einer Faseranordnung in der Längsrichtung des jeweiligen Streifens (11, 12) verlaufen.

4. Kunststoffschlauch nach einem der vorhergehenden Ansprüche, **dadurch gekennzeichnet, dass** die Streifen (11, 12) in seiner Längsrichtung verlaufen oder um den Schlauchkörper (13) herum gewendelt sind.

5. Kunststoffschlauch nach einem der vorhergehenden Ansprüche, **dadurch gekennzeichnet, dass** der Abstand zwischen den Streifen (11 bzw. 12) wesentlich kleiner als die Streifenbreite ist, vorzugsweise kleiner als 10 % der Streifenbreite.

6. Kunststoffschlauch nach einem der vorhergehenden Ansprüche, **dadurch gekennzeichnet, dass** er mit einer die Streifen (11, 12) einschließenden schlauchförmigen Schutzhülle (14) aus Kunststoffmaterial versehen ist.

7. Kunststoffschlauch nach einem der vorhergehenden Ansprüche, **dadurch gekennzeichnet, dass** die Streifen (11, 12) wenigstens teilweise mit dem Schlauchkörper (13) oder mit einer ihn umgebenden Schutzschicht verklebt, verschweißt oder einextrudiert sind.

8. Kunststoffschlauch nach einem der vorhergehenden Ansprüche, **dadurch gekennzeichnet, dass** der Schlauchkörper (13) und/oder das Geflecht der Streifen (11, 12) aus Polyurethan, Polyamid, Polyethylen, Polypropylen, PTFE oder PVC besteht.

9. Kunststoffschlauch nach einem der vorhergehenden Ansprüche, **dadurch gekennzeichnet, dass** die Streifen in mehreren übereinanderliegenden Schichten angeordnet und radial gegeneinander isoliert sind, insbesondere durch elektrisch isolierende Zwischenschichten.

10. Kunststoffschlauch nach Anspruch 9, **dadurch gekennzeichnet, dass** die Streifen jeweils radial fluchtend übereinander liegen.

## Claims

1. Plastic hose, in particular a pneumatic hose, with two or more electrical conductors extending along the hose body, **characterised in that** the conductors are in the form of strips (11, 12) of a metallised mesh of plastic material or natural fibres, which are attached to the hose body with clearance from one another.

2. Plastic hose according to claim 1, **characterised in that** the mesh of the strips (11, 12) has fibre arrangements running substantially at right-angles to one another.

3. Plastic hose according to claim 2, **characterised in that** the fibres of one of the fibre arrangements run in the longitudinal direction of the strips (11, 12) concerned.

4. Plastic hose according to any of the preceding claims, **characterised in that** the strips (11, 12) run in its longitudinal direction or are wound around the hose body (13).

5. Plastic hose according to any of the preceding claims, **characterised in that** the clearance between the strips (11 and 12 respectively) is significantly less than the strip width, preferably less than 10% of the strip width.

6. Plastic hose according to any of the preceding claims, **characterised in that** it is provided with a hose-like protective sleeve (14) of plastic material which surrounds the strips (11, 12).

7. Plastic hose according to any of the preceding claims, **characterised in that** the strips (11, 12) are at least partly bonded or welded to or extruded integrally with the hose body (13) or to a protective layer encompassing the former.

8. Plastic hose according to any of the preceding claims, **characterised in that** the hose body (13) and/or the mesh of the strips (11, 12) are made of polyurethane, polyamide, polyethylene, polypropylene, PTFE or PVC.

9. Plastic hose according to any of the preceding claims, **characterised in that** the strips are arranged in several superimposed layers and radially insulated from one another, in particular through electrically insulating intermediate layers.

10. Plastic hose according to claim 9, **characterised in that** the strips lie above and radially flush with one another.

## Revendications

1. Tuyau en matière plastique, notamment tuyau pneumatique, avec au moins deux lignes électriques s'étendant le long du corps du tuyau, **caractérisé en ce que** les lignes sont réalisées sous la forme de bandes (11, 12) d'une tresse métallisée en une matière synthétique ou en fibres naturelles, lesquelles sont placées à distance l'une de l'autre sur le corps de tuyau(13).

2. Tuyau en matière plastique selon la revendication 1, **caractérisé en ce que** la tresse des bandes (11, 12) présente des dispositions de fibres s'étendant sensiblement à angle droit les unes par rapport aux autres.

3. Tuyau en matière plastique selon la revendication 2, **caractérisé en ce que** les fibres d'une disposition de fibres s'étendent dans la direction longitudinale de la bande (11, 12) respective.

4. Tuyau en matière plastique selon l'une des revendications précédentes, **caractérisé en ce que** les bandes (11, 12) s'étendent dans sa direction longitudinale ou sont enroulées autour du corps de tuyau (13).

5. Tuyau en matière plastique selon l'une des revendications précédentes, **caractérisé en ce que** la distance entre les bandes (11 et 12) est sensiblement inférieure à la largeur des bandes, de préférence inférieure à 10 % de la largeur des bandes.

6. Tuyau en matière plastique selon l'une des revendications précédentes, **caractérisé en ce qu'**il est pourvu d'une gaine de protection (14) en matière plastique, en forme de tuyau, emprisonnant les bandes (11, 12).

7. Tuyau en matière plastique selon l'une des revendications précédentes, **caractérisé en ce que** les bandes (11, 12) sont collées, soudées ou extrudées au moins en partie avec le corps de tuyau (13) ou avec une couche de protection l'entourant.

8. Tuyau en matière plastique selon l'une des revendications précédentes, **caractérisé en ce que** le corps de tuyau (13) et/ou la tresse de bandes (11, 12) est constituée de polyuréthane, de polyamide, de polyéthylène, de polypropylène, de PTFE ou de PVC.

9. Tuyau en matière plastique selon l'une des revendications précédentes, **caractérisé en ce que** les bandes sont disposées en plusieurs couches superposées et sont isolées radialement les unes par rapport aux autres, en particulier par des couches intermédiaires électriquement isolantes.

10. Tuyau en matière plastique selon la revendication 9, **caractérisé en ce que** les bandes sont superposées en étant radialement alignées.
